# FASCICULE DE BREVET EUROPEEN

(11) **EP 2 978 984 B1**
(45) Date de publication et mention de la délivrance du brevet: **28.06.2017**
(21) Numéro de dépôt: 14717156.5
(22) Date de dépôt: 18.03.2014
(51) Int. Cl.: F16C 33/60, F16C 25/08, F16C 19/16, F16C 19/52

(54) **PALIER A DOUBLE PRECHARGE INTERNE**
LAGER MIT DOPPELTER INTERNER VORSPANNUNG
BEARING WITH DOUBLE INTERNAL PRELOAD

(30) Priorité: 28.03.2013 FR 1352807
(43) Date de publication de la demande: 03.02.2016
(73) Titulaire: Snecma Société Anonyme, 75015 Paris (FR)
(72) Inventeur: BOUFFLERT, Sébastien, F-27400 Louviers (FR); BOURDIN, Philippe, F-27950 Saint-Just (FR); LEMAITRE, Alban, F-27200 Vernon (FR); TESSIER, Fabien, F-27200 Vernon (FR)
(74) Mandataire: David, Alain
(86) Numéro de dépôt international: PCT/FR2014/050622
(87) Numéro de publication internationale: WO 2014/154971

(56) Documents cités:
- DE-A1-102009 036 303
- FR-A1- 2 932 530
- JP-A- 2000 320 550
- JP-A- 2005 201 334

## Description

### Domaine de l'invention

La présente invention a pour objet un palier ayant aussi fonction de butée axiale pour machine tournante, comprenant une bague intérieure pouvant être disposée autour d'un arbre, une bague extérieure pouvant être montée dans un carter, et entre les deux des éléments de roulement.

### Art antérieur

Dans le cadre de machines tournantes cryotechniques montées sur des paliers radiaux fluides, dont un des intérêts majeurs est la longue durée de vie, comparativement aux machines sur paliers classiques à billes ou rouleaux qui, du fait de l'impossibilité en ambiance cryogénique d'apporter la lubrification nécessaire, sont confrontées à des problèmes d'usure, il est connu des butées axiales qui sont destinées à reprendre les efforts résiduels axiaux. L'architecture sur paliers fluides nécessite en effet un élément de reprise des efforts résiduels axiaux, notamment en phase transitoire (à faible vitesse) pour les machines dotées d'un système d'équilibrage axial actif en régime stabilisé, comme décrit dans la demande FR2932530 au nom de la demanderesse.

Cette butée axiale de l'art antérieur présente toutefois certains inconvénients résultant notamment de la gestion du jeu nécessaire au coulissement axial de l'arbre rotor lors du passage des vitesses faibles aux vitesses élevées. En outre, du fait du fonctionnement du roulement à 3 ou 4 points de contact, les transitions de sens de chargement sont mal assurées.

On connaît aussi avec les documents DE 10 2009 036303 A1, JP 2000-320550 A et JP 2005-201334 A des paliers de machines tournantes.

### Définition et objet de l'invention

La présente invention vise à remédier aux inconvénients précités en proposant un palier pour machine tournante selon la revendication 1. L'adjonction des premier et second systèmes de pré-charge permet de faciliter le fonctionnement en deux points de contact lorsque le palier est mis à contribution. En écartant les deux demi-bagues, ce système permet d'éviter de longs fonctionnements sur trois points de contact qui peuvent dégrader le roulement tout en facilitant la conception du roulement malgré l'ajout d'une nouvelle pièce.

La fonction de palier et de butée axiale bidirectionnelle réalisée par l'invention en favorisant un sens privilégié de fonctionnement (effort vers le premier système de pré-charge) présente de plus l'avantage majeur de pouvoir gérer l'important jeu (jusqu' à quelques millimètres) permettant le coulissement axial et donc de faciliter l'ouverture d'un système d'équilibrage axial de type actif (ajutage sur la roue à aubes ou rouet par exemple), sans recourir à un classique doublet de roulements.

Selon le mode de réalisation envisagé, lesdites première et deuxième demi-bagues peuvent constituer ladite bague extérieure et être alors destinées à être montées coulissant dans un carter fixe, l'organe de butée formant une partie dudit carter fixe ou constituer ladite bague intérieure et destinées à être montées coulissant autour d'un arbre fixe, l'organe de butée formant alors une partie dudit arbre fixe.

De préférence, les premier et second systèmes de pré-charge comprennent un ensemble élastique composé avantageusement de une ou plusieurs rondelles ressort.

La butée axiale selon l'invention est avantageusement appliquée à une machine tournante cryotechnique.

### Brève description des dessins

D'autres caractéristiques et avantages de l'invention ressortiront de la description suivante de modes particuliers de réalisation donnés à titre d'exemples en référence aux dessins annexés ; sur lesquels :
- la figure 1 est une vue en demi-coupe axiale d'un exemple de palier (en position de repos) selon l'invention, et
- la figure 2 est une vue en demi-coupe axiale du palier de la figure 1 en fonctionnement.

### Description détaillée de modes de réalisation préférentiels

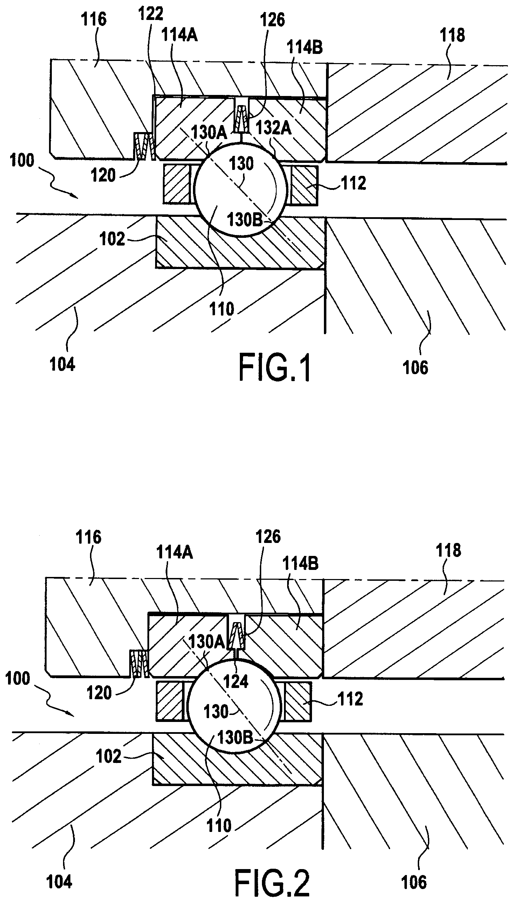

On voit sur la figure 1 un exemple de palier faisant aussi fonction de butée axiale selon l'invention. Ce palier 100 comprend une bague intérieure 102 montée radialement sur un arbre central 104, 106 qui peut par exemple être solidaire d'un rouet de machine tournante cryotechnique. L'entraînement en rotation de la bague intérieure 102 est assuré par l'arbre central qui est avantageusement monté sur des paliers classiques, de type fluide, à feuilles, magnétique ou autres non représentés sur le dessin et la machine tournante peut être avantageusement équipée d'un système d'équilibrage axial actif en régime stabilisé (mais un système passif convient tout autant), tel que celui décrit dans la demande citée en préambule.

La butée axiale comprend des éléments de roulement 110, tels que des billes à contacts obliques, maintenus dans une cage 112 et disposés entre la bague intérieure 102 et une bague extérieure 114 réalisée en deux parties 114A, 114B centrées sur un carter fixe 116 dans lequel elles peuvent coulisser dans le sens axial dans certaines phases de fonctionnement.

Les demi-bagues extérieures 114A, 114B sont enserrées dans le sens axial entre d'une part une partie de carter ou un organe de butée fixe 118 solidaire du carter 116 et d'autre part un premier système de pré-charge 120 formé par un ensemble élastique, par exemple une ou plusieurs rondelles ressort, exerçant un premier effort axial prédéterminé, par exemple de l'ordre de quelques centaines de newton, tel que, tant que la charge axiale exercée par l'arbre tournant est nulle ou inférieure à un seuil donné (par exemple également de l'ordre de quelques centaines de newton), qui dépend de la vitesse de rotation, il est créé un jeu 122 d'une largeur de quelques centièmes à plusieurs millimètres entre la demi-bague extérieure 114A et le carter 116 (localisé du côté du premier système de pré-charge 120), les demi-bagues extérieures 114A, 114B étant elles-mêmes séparées par un interstice 124 (illustré à la figure 2) pouvant être ouvert de plusieurs millimètres en fonctionnement par un second système de pré-charge 126 disposé entre les demi-bagues extérieures et formé également par un ensemble élastique, par exemple composé de une ou plusieurs rondelles ressort, exerçant un second effort axial prédéterminé, par exemple de l'ordre de quelques dizaines de newton, inférieur au premier effort axial prédéterminé. Ces rondelles ressort peuvent avantageusement être maintenues en position par une agrafe annulaire (non représentée) venant se positionner dans une rainure associée de chacune des demi-bagues extérieures.

Le fonctionnement du palier conforme à l'invention est maintenant décrit ci-après par comparaison des figures 1 et 2.

On considère comme première phase la phase pendant laquelle le roulement étant entraîné en rotation par l'arbre tournant, celui-ci n'exerce pas d'effort sur le palier ou alors un faible effort axial sur ce palier dans la direction opposée à l'effort du système de pré-charge 120. Pendant cette phase, tant que cet effort axial est inférieur à une valeur seuil, du fait que le premier effort axial prédéterminé de ce premier système de pré-charge 120 est supérieur à celui exercé par le second système de pré-charge 126, le jeu 122 est ouvert et le roulement fonctionne dans des conditions de transition potentiellement instable (potentiellement en 3 points de contact 130A, 130B, 132A, glissement des billes...). Cette première phase de fonctionnement est toutefois minimisée par l'introduction du second système de pré-charge 126 au sein même du roulement qui permet l'ouverture et un accroissement de la largeur de l'interstice 124 lorsque l'effort axial augmente.

Le roulement à billes reprend la poussée axiale, sa vitesse évolue et une fois que l'effort axial exercé par l'arbre est supérieur à cette valeur seuil, la demi-bague extérieure 114A coulisse dans le carter 116 et le jeu 122 se referme dans une deuxième phase de fonctionnement. Le second effort axial prédéterminé exercé par le second système de pré-charge 126 élargit alors l'interstice 124 en écartant la demi-bague extérieure 114A (ainsi que les billes qui sont alors libérées du troisième point de contact 132A) de la demi-bague extérieure 114B, cette dernière restant en appui sur sa butée fixe 118 solidaire du carter. La valeur est maximale lorsque le jeu 122 est nul. Le roulement fonctionne alors sur deux points de contact 130A et 130B. L'intérêt de ce fonctionnement est de minimiser la puissance dissipée et l'usure selon un fonctionnement classique des roulements à billes. Il est à même de pouvoir supporter des niveaux d'efforts axiaux significatifs. De plus, ce type de roulement permet un coulissement important de l'arbre dans le carter, ce qu'un roulement classique ne pourrait faire (quelques millimètres). L'autre demi-bague extérieure 114B étant maintenue en appui sur la butée fixe 118, le jeu entre les billes et cette demi-bague extérieure est choisi de manière à ce que cette demi-bague extérieure 114B ne vienne pas perturber le fonctionnement du roulement en deux points de contact. Ce jeu est directement lié au jeu 122 qu'il est possible de régler au montage.

La troisième phase est constituée par la phase qui pourrait être qualifiée de délestage dans laquelle l'effort axial exercé par l'arbre sur le palier, toujours orienté vers la butée, chute du fait de l'entrée en fonction d'un système d'équilibrage axial actif jusqu'à s'annuler. Dès que sa valeur devient inférieure à la valeur seuil, le jeu 122 s'ouvre à nouveau et la demi-bague extérieure 114A ainsi que les billes coulissent vers l'autre demi-bague extérieure 114B, recréant potentiellement un contact 132A entre les billes et la demi-bague extérieure 114B comme le ferait un roulement trois points de contact classique. Comme explicité précédemment, le roulement fonctionne alors dans des conditions de transition potentiellement instable (glissement des billes...) qui doivent être minimisées. Le roulement reste entrainé par l'arbre en rotation et est soumis à la fois à l'effort exercé par l'arbre et à l'effort interne incluant l'effort exercé par le second système de pré-charge 126 conduisant potentiellement au point de contact 132A.

Enfin, dès que l'effort exercé par l'arbre est nul puis s'inverse et devient négatif, le roulement reste entrainé mais cette fois au travers du contact 132A. Faisant alors butée dans l'autre sens, il fonctionne toutefois toujours potentiellement sur trois points de contact (comme un roulement en trois points classique).

Avec l'invention, on s'affranchit de la gestion thermomécanique de l'interstice et des jeux internes de la bague extérieure en introduisant une pré-charge secondaire interne au roulement (rondelle ressort 126 localisée entre les deux demi-bagues extérieures 114A, 114B). Ainsi, lorsque le roulement est soumis à l'effort axial de l'arbre et fonctionne sur deux points de contact 130A, 130B, cette pré-charge interne secondaire permet de décaler axialement la demi-bague extérieure 114B inutile au fonctionnement du roulement pendant cette phase. Cette pré-charge secondaire permet également d'augmenter et de mieux maîtriser le jeu entre la bille 110 et cette demi-bague 114B potentiellement gênante pour le fonctionnement du roulement.

On notera que si l'invention a été décrite avec un palier dont la bague extérieure coulisse dans le carter fixe, la bague intérieure étant fixe dans l'arbre tournant, il est clair, à l'image de la demande citée en préambule, que l'invention trouve aussi application à un palier dont la bague intérieure coulisse dans l'arbre, cette fois fixe, la bague extérieure se trouvant dans un carter tournant.

## Revendications

1. Palier pour machine tournante, comprenant d'une part une bague intérieure (102), une bague extérieure, et entre les deux des éléments de roulement (110), et d'autre part un premier système de pré-charge (120) exerçant un premier effort axial prédéterminé, l'une desdites bagues intérieure et extérieure comportant en outre des première (114A) et deuxième (114B) demi-bagues pouvant être enserrées dans le sens axial entre un organe de butée (118) et ledit premier système de pré-charge, **caractérisé en ce qu'**il comporte en outre un second système de pré-charge (126) inséré dans le sens axial entre lesdites première et deuxième demi-bagues et exerçant un second effort axial prédéterminé inférieur audit premier effort axial prédéterminé.

2. Palier selon la revendication 1, **caractérisé en ce que** lesdites première et deuxième demi-bagues constituent ladite bague extérieure et sont destinées à être montées coulissant dans un carter (116) fixe.

3. Palier selon la revendication 1, **caractérisé en ce que** lesdites première et deuxième demi-bagues constituent ladite bague intérieure et sont destinées à être montées coulissantes autour d'un arbre (104) fixe.

4. Palier selon la revendication 1, **caractérisé en ce que** les premier et second systèmes de pré-charge (120, 126) comprennent un ensemble élastique.

5. Palier selon la revendication 4, **caractérisé en ce que** ledit ensemble élastique comporte une ou plusieurs rondelles ressort.

6. Palier selon la revendication 1, **caractérisé en ce que** lesdits éléments de roulement sont des roulements à billes à contacts obliques.

7. Butée axiale de machine tournante montée sur paliers radiaux fluides comportant un palier selon l'une quelconque des revendications 1 à 6.

## Patentansprüche

1. Lager für eine umlaufende Maschine, umfassend einerseits einen Innenring (102), einen Außenring und zwischen den beiden Wälzelemente (110) sowie andererseits ein erstes Vorspannsystem (120), das eine erste vorbestimmte axiale Kraft ausübt, wobei einer der Innen- und Außenringe ferner einen ersten (114A) und einen zweiten (114B) Halbring umfasst, die zwischen einem Anschlagorgan (118) und dem ersten Vorspannsystem in axialer Richtung eingeklemmt werden können, **dadurch gekennzeichnet, dass** es ferner ein zweites Vorspannsystem (126) umfasst, das zwischen dem ersten und dem zweiten Halbring in axialer Richtung eingesetzt ist und das eine zweite vorbestimmte axiale Kraft, die geringer als die erste vorbestimmte axiale Kraft ist, ausübt.

2. Lager nach Anspruch 1, **dadurch gekennzeichnet, dass** der erste und der zweite Halbring den Außenring bilden und dazu bestimmt sind, in einem festen Gehäuse (116) verschieblich angebracht zu werden.

3. Lager nach Anspruch 1, **dadurch gekennzeichnet, dass** der erste und der zweite Halbring den Innenring bilden und dazu bestimmt sind, um eine feste Welle (104) herum verschieblich angebracht zu werden.

4. Lager nach Anspruch 1, **dadurch gekennzeichnet, dass** das erste und das zweite Vorspannsystem (120, 126) eine Federanordnung umfassen.

5. Lager nach Anspruch 4, **dadurch gekennzeichnet, dass** die Federanordnung einen oder mehrere Federringe umfasst.

6. Lager nach Anspruch 1, **dadurch gekennzeichnet, dass** die Wälzelemente Schrägkugellager sind.

7. Axialanschlag einer umlaufenden Maschine, angebracht auf Flüssigkeitsradiallagern, die ein Lager nach einem der Ansprüche 1 bis 6 umfassen.

## Claims

1. A bearing for a rotary machine, the bearing comprising firstly an inner ring (102), an outer ring, and rolling elements (110) between them, and secondly a first pre-loading system (120) exerting a first predetermined axial force, one of said inner and outer rings comprising first and second half-rings (114A, 114B) that may be clamped in the axial direction between a thrust member (118) and said first pre-loading system, **characterized in that** it further comprises a second pre-loading system (126) inserted in the axial direction between said first and second half-rings and exerting a second predetermined axial force less than said first predetermined axial force.

2. A bearing according to claim 1, **characterized in that** said first and second half-rings constitute said outer ring and are for mounting slidably in a stationary casing (116).

3. A bearing according to claim 1, **characterized in that** said first and second half-rings constitute said inner ring and are designed to be slidably mounted around a stationary shaft (104).

4. A bearing according to claim 1, **characterized in that** the first and second pre-loading systems (120, 126) comprise respective resilient assemblies.

5. A bearing according to claim 4, **characterized in that** each said resilient assembly comprises one or more spring washers.

6. A bearing according to claim 1, **characterized in that** said rolling elements are oblique-contact bearing balls.

7. Axial thrust bearing of a rotary machine mounted on radial fluid bearings comprising a bearing according to any one of claims 1 to 6.
